# EUROPEAN PATENT SPECIFICATION

(11) **EP 0 728 976 B1**
(45) Date of publication and mention of the grant of the patent: **07.01.1999**
(21) Application number: 96301208.3
(22) Date of filing: 22.02.1996
(51) Int. Cl.: F16L 23/12, F16L 58/18, B29C 63/34

(54) **Improvements in and relating to pipe joints**
Verbesserungen an oder bezüglich Rohrverbindungen
Améliorations dans, ou concernant, les raccords de tuyaux

(30) Priority: 22.02.1995 GB 9503494
(43) Date of publication of application: 28.08.1996
(73) Proprietor: VICTAULIC PLC, Hitchin Hertfordshire SG4 0UD (GB)
(72) Inventor: Headford, Alan Lloyd, Bedford, Bedfordshire MK40 2BD (GB)
(74) Representative: Hutchins, Michael Richard

(56) References cited:
- EP-A- 0 089 253
- EP-A- 0 441 619
- US-A- 3 650 550
- US-A- 4 127 287

## Description

This invention relates to improved pipe joints and in particular pipe joints of the type suitable for high pressure pipelines such as the pipelines used in off-shore applications.

Off-shore pipelines, such as those used to pump oil and gas ashore from off-shore drilling rigs and terminals, typically are constructed so as to be capable of withstanding very high internal pressures. For example, it is rare for the maximum pressures generated within a given pipeline to be less than 13.79 x 10⁶ N/m² (2000 psi) and frequently pressures are significantly higher. This contrasts with the internal pressures generated within pipelines used for domestic utilities such as domestic gas and water where the internal pressures rarely exceed more than about 1.38 x 10⁶ N/m² to 2.07 x 10⁶ N/m² (200 to 300 psi).

The high pressures encountered in off-shore pipelines arise in part because of the high well pressures encountered with gas and oil wells, and in part by the fact that it is necessary to pump the contents of the pipeline over long distances using only a single pumping station and consequently high pump pressures are required.

The pipelines used in such off-shore situations need to be strong and durable and therefore typically are formed from steel. Lengths of steel pipe are joined by means of welding and/or couplings of a mechanical nature which are typically of the "pin and box" type. In "pin and box" couplings, the box is constituted by a socket formation which may have a parallel walled or flared inner bore, and the pin is shaped so as to fit into and be retained in the socket. The mating surfaces of the "pin" and "box" may be threaded, or may have a snap-fit construction, by way of example. Metal-to-metal seals formed between the pin and box are capable of withstanding pressures of many thousands of pounds per square inch. Metal-to-metal connections of this type are well known and have been the subject of extensive research and development.

One problem encountered with metal pipe lines in general, and off-shore pipelines in particular, is the problem of corrosion. It is undesirable from an economic standpoint to construct pipelines of stainless steel, and therefore the somewhat cheaper carbon steels are often used for the construction of the pipes. It is therefore necessary to include an allowance in the wall thickness for corrosion or to protect the pipes against corrosion in some way and, for example, the outer surface of the pipe may be protected by means of an appropriate surface treatment or covering. In order to protect the inner bore of the pipe from corrosive effects of materials passing through the pipe, it is possible to provide a liner formed of a polymeric material such as a polyolefin.

A further problem encountered with such pipelines is to ensure that the joints between adjacent lengths of liner pipe can withstand the high internal pressures and tensile stresses encountered in use. Where mechanical joints are employed for the liner pipes, it can be difficult to ensure the integrity of the joint over a prolonged period. This is because the liner pipes may be subject to periodic tensile stresses of considerable magnitude. Such stresses are the result of a number of factors such as flow induced vibration, the swelling of the pipeline materials due to the nature of the products passing through the pipelines, and thermal expansion and contraction. Moreover, the methods for installing the liner pipes, which generally involve hauling the liner through the pipe, tend to set up tensile stresses in the pipe from the outset. The resultant effects of these various periodic tensile stresses on the liner pipe is that one liner pipe member can be pulled away from its joint with an adjacent pipe liner member and displaced axially along the pipeline.

Various attempts have been made to overcome this problem but at the present time there remains a need for a pipe joint of the aforesaid type which can provide a means of firmly anchoring the liner pipe members in place so as to prevent loss of liner pipe joint integrity and consequent leakage of the contents of the liner pipe into the annular space between the liner pipe and steel outer pipe. Existing known mechanical anchorages or joints for liner pipes rely on a gripping action, the effectiveness of which will reduce with time and lining temperature fluctuations.

EP-A-0 441 619 discloses a pipe joint between two stub-flanged plastics pipes in which the stub flanges of the pipes are provided with reinforcing hoops. However, there is no disclosure or suggestion in this document of a means of overcoming the abovementioned problems encountered with offshore pipelines.

US-A-3 650 550 discloses the use of a perforated reinforcing hoop for strengthening the flange of a liner pipe against cold flow. Again, however, this document does not address the aforementioned problems encountered in off-shore pipelines.

In a first aspect, the invention provides a pipe joint comprising first and second outer pipe members; means for connecting the first and second outer pipe members in an end-to-end fashion so as to provide a fluid-tight seal therebetween, the fluid-tight seal being capable of withstanding internal pressures of at least 6.895 x 10⁶ N/m² (1000 psi); and, arranged within at least the first outer pipe member, a first inner liner pipe member formed of a polymeric material; the liner pipe member being provided at its end with a radially outwardly extending annular stub flange; an annular supporting hoop being disposed in an annular groove in the end face of the stub flange; the first and second outer pipe members together defining on their respective radially inner surfaces an annular recess for retaining the stub flange of the liner pipe member and for clamping the stub flange in place to hold it against axial displacement, wherein the annular recess comprises a pair of generally radially extending confronting surfaces and a generally axially extending surface linking the said generally radially extending surfaces.

The term "pipe members" as used herein refers not only to pipes as such but also to pipe couplings, pipe connectors and pipe fittings such as T-pieces, bends, adaptcrs, valve housings etcetera.

The first and second outer pipe members are generally formed of a suitable metal such as an appropriate grade of carbon steel. The joint between the outer pipe members is typically constructed so as to be capable of withstanding internal pressures of 34.47 x 10⁶ N/m² (5000 psi) or more.

The means for connecting the first and second outer pipe members may take the form of a thread on a radially outer surface of one of the outer pipe members which engages a thread on a radially inner surface of the other outer pipe member. However, as one alternative the first and second outer pipe members may be provided with annular ridges, recesses or other formations which enable the pipe members to be coupled together in a snap-fit joint. As another alternative, the first and second outer pipe members may be provided with flanges or other like constructions which enable the pipe members to be secured together by external securing means such as flange bolts and clamping arrangements.

In one embodiment, both the first and second outer pipe members are pipes, the second outer pipe member having an inner liner pipe member as hereinbefore defined arranged therein.

Accordingly, the invention also provides a pipe joint comprising first and second outer pipe members; means for connecting the first and second outer pipe members in an end-tc-end fashion so as to provide a fluid-tight seal therebetween, the fluid tight-seal being capable of withstanding internal pressures of at least 6.895 x 10⁶ N/m² (1000 psi); and, arranged within the outer pipe members, first and second inner liner pipe members formed of a polymeric material; the liner pipe members being provided at their facing ends with radially outwardly extending annular stub flanges providing mating surfaces between the two liner pipes generally normal to the axial direction of the liner pipes; an annular supporting hoop or hoops being disposed in an annular groove in the mating faces of each stub flange; the first and second outer pipe members together defining on their respective radially inner surfaces an annular recess for retaining the stub flange of the liner pipe members and for clamping the stub flanges together to form a fluid-tight seal therebetween, wherein the annular recess comprises a pair of generally radially extending confronting surfaces and a generally axially extending surface linking the said generally radially extending surfaces.

The inner liner pipe member or members is or are formed from a suitable polymeric material, and examples of such materials include polyolefin homopolymers and co-polymers thereof. Examples of polyolefins suitable for use in constructing the liner pipes include polypropylene and polyethylene, for example HDPE, LDPE, MDPE, etc. Other materials which may be used as alternatives to polyolefins include polyvinylidene difluoride (PVDF).

The liner pipe members may have single layer or multilayer pipe walls. For example, the liner pipe members may have one or more barrier layers formed from a barrier material such as a polyamide, in addition to a polyolefin layer. The barrier layer serves to prevent or reduce permeation of hydrocarbons through the liner wall.

The abutting ends of the liner pipe elements have stub flanges, the term "stub flanges" being a term well known in the art. The stub flanges are compressed together by the walls of the annular recess on the inner OD of the outer pipe members as the outer pipe members are tightened against each other, such that a seal is formed between the abutting stub flanges. The stub flanges preferably have an initial axial dimension greater that the axial length of the annular recess in order to increase the degree of compression of the stub flanges as the outer pipes are tightened together.

The stub flanges are each provided with an annular recess in their end faces in which are located reinforcing hoops usually formed of a metal material such as steel.
The reinforcing hoops of the respective stub flanges act as reinfcrcing struts and serve to strengthen the stub flange and serve to prevent it from being displaced from the joint by the periodic tensile stresses encountered by the liner pipe members in use.

The annular recess defined by the outer metal pipe members will be disposed at or near the interface between the outer pipe elements. As indicated above, the annular recess comprises a pair of generally radially extending confronting surfaces and a generally axially extending surface linking the said generally radially extending surfaces. The arrangement will usually be such that one radially extending surface is provided by one pipe element and the other radially extending surface is provided by the other pipe element. The generally axially extending surface may be provided by one of the pipe elements, or by both.

In one embodiment, the stub flange of the or each inner liner pipe element may be formed of a cross-linked material so as to strengthen the stub and render it more elastic. This would have the effect of increasing its resistance to being pulled out of the joint through axial end loads. Moreover, the elasticity imparted by crosslinking should assist in reducing or eliminating compressive stress relaxation, a problem which could otherwise lead to the integrity of the seal between the flanges being reduced after a period of time in service.

In order to increase the ability of the stub flanges to resist axial movement of the liner pipe, and also to enhance the seal between the ends of the polymeric liner pipe members, the respective stub flanges of the liner pipe members may be welded together during installation. In one embodiment, the respective stub flanges may be friction welded together. Thus, when a screw-threaded connection is provided between the outer metal pipe , the friction between the stub flanges caused by one stub flange being rotated relative to the other as the outer pipe members are screwed together may generate sufficient heat to cause fusion of the polymeric material at the surfaces of the stub flanges.

As an alternative, or in addition to any friction-welding of the stub ends of the liner pipe members, a heat induction coil may be inserted along the string of pipes being assembled, the coil being used to energize and heat the reinforcing hoop at the stub interface to cause the polymeric material of the stub flanges to fuse and weld together.

In a further embodiment, the invention provides a process for forming a pipe joint of the aforesaid type in which the hoop reinforced stub flange is formed in situ using a hot forming technique. For example, an induction heated sleeve may be placed about the end of a plain ended polymeric pipe member to soften or melt the said end, and a jacking head having a reinforcing hoop supported thereon urged against the softened or melted end so as to deform it radially outwardly into the shape of a stub flange, the reinforcing hoop being embedded in the stub flange as it is formed.

One of several advantages of forming the stub flange in situ in this way is that the process would create hoop retaining lips which would assist in holding the reinforcing hoop in place.

The invention will now be illustrated by reference to the particular embodiments shown in the accompanying drawings of which:
Figure 1 is a longitudinal partial sectional elevation through a pipe joint according to one embodiment of the invention;
Figure 2 is an enlarged view of the part of the sectional elevation of Figure 1;
Figure 3 is an enlarged partial sectional elevation of a second embodiment of the invention;
Figure 4 is an enlarged partial sectional elevation of a third embodiment of the invention;
Figure 5 is a partial longitudinal sectional elevation of a fourth embodiment of the invention;
Figure 6 is a partial longitudinal sectional elevation of a fifth embodiment of the invention;
Figure 7 is a longitudinal sectional elevation illustrating schematically apparatus for forming a stub flange in situ;
Figures 8a to 8d illustrate schematically the formation of a stub flange in situ; and
Figure 9 illustrates schematically apparatus for softening the end of a plain pipe end prior to stub flange formation.

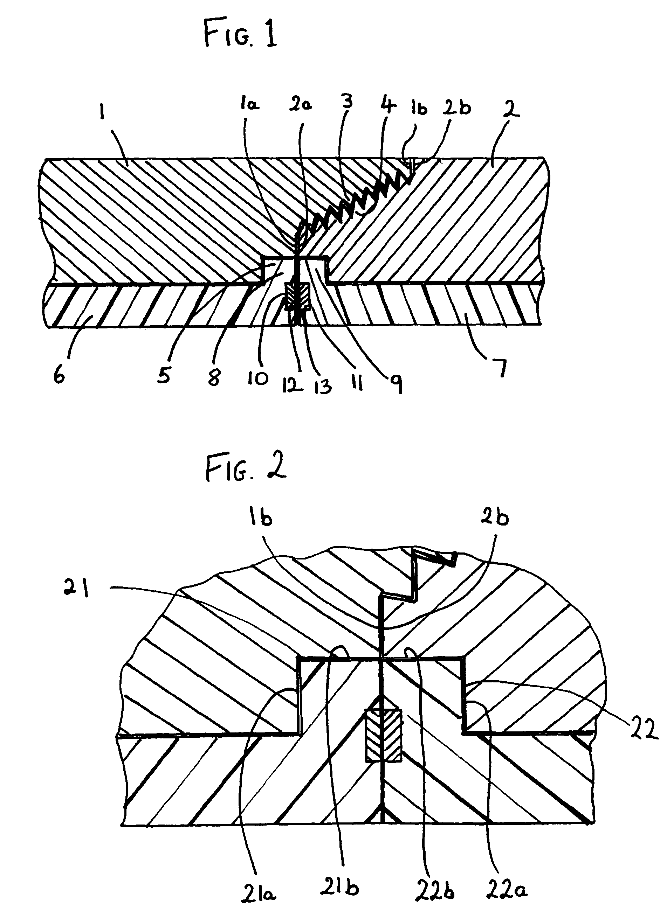

Referring now to Figure 1 it can be seen that a pipe joint according to one embodiment of the invention comprises a pair of steel outer pipe members 1 and 2 connected together, pipe member 1 functioning as a socket or "box" and pipe member 2 functioning as a spigot or "pin". Pipe member or "box" 1 has a flared internal surface 3 which is threaded to engage a mating thread on tapering surface 4 of the "pin" member 2. At radially inner and radially outer locations, the pipe members 1, 2 have axially facing wall portions 1a, 1b, 2a, 2b which are forced into sealing contact as the "pin" member 2 is screwed into the "box" member 1. The metal-to-metal seals formed at 1a, 2a and 1b, 2b are capable of withstanding pressures in excess of 6.895 x 10⁶ N/m² (1000 psi), and more usually in excess of 34.47 x 10⁶ N/m² (5000 psi). In order to enhance the sealing capacity of the joint, sealing compounds may be inserted between threaded surfaces 3, 4. Such sealing compounds are well known and their composition need not be discussed here.

Arranged radially inwardly of the steel pipe members 1 and 2 are liner pipe members 6 and 7 formed from a polymeric material such as polyethylene. Liner pipe members 6, 7 each have stub flanges 8, 9 which are accommodated in an annular recess 5 extending around the inner diameter of the steel pipes 1 and 2 in the region of the junction therebetween. The formation of the annular recess 5 is illustrated in more detail in Figures 2, 3 and 4.

The stub ends of the polymeric liner pipe elements 6, 7 each have annular recesses 10, 11 in their end faces. Located within each recess 10, 11 are reinforcing hoops 12, 13 formed from a steel material. It will be appreciated that rather than each stub end being provided with its own reinforcing hoop, a single reinforcing hoop of the appropriate axial thickness could be employed.

In this embodiment, the stub flanges 8, 9 of the polymeric liner pipes 6, 7 are formed from non-crosslinked polyethylene but they could advantageously be crosslinked prior to service for example by irradiation from a suitable source such as a cobalt 60 source. Typically, irradiation would be carried such that the absorbed doses of ionising radiation fall within the range 0-300 kiloGray, preferably 50-250 kiloGray, and more preferably 150-200 kiloGray.

The formation of the annular recess 5 is illustrated in more detail in Figures 2, 3 and 4. In Figure 2, there is shown an arrangement wherein each of the steel pipe elements, 1 and 2 is provided at a radially inner location on its end face with annular recesses 21, 22. The annular recess of pipe element 1 is defined by a radial end wall 21a and an axially extending wall 21b. Similarly the annular recess of pipe element 2 is defined by radially extending wall 22a and axially extending wall 22b. Disposed radially outwardly of the recess 5 are abutting end walls 1b and 2b as described above. In this embodiment, the recess 5 spans the junction between the two pipe elements 1 and 2.

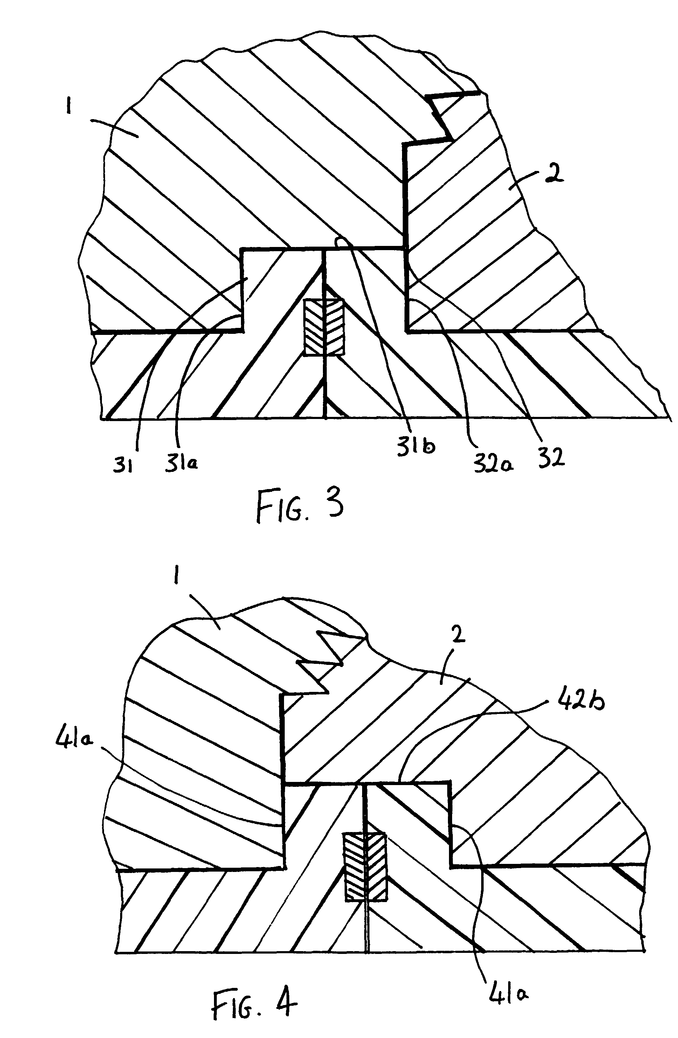

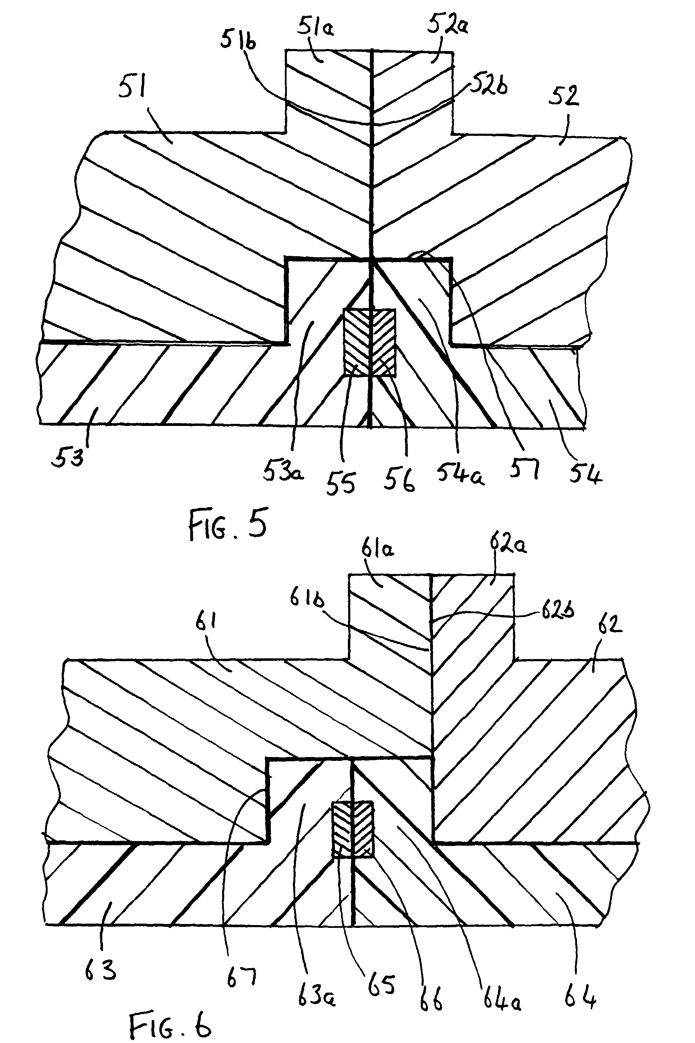

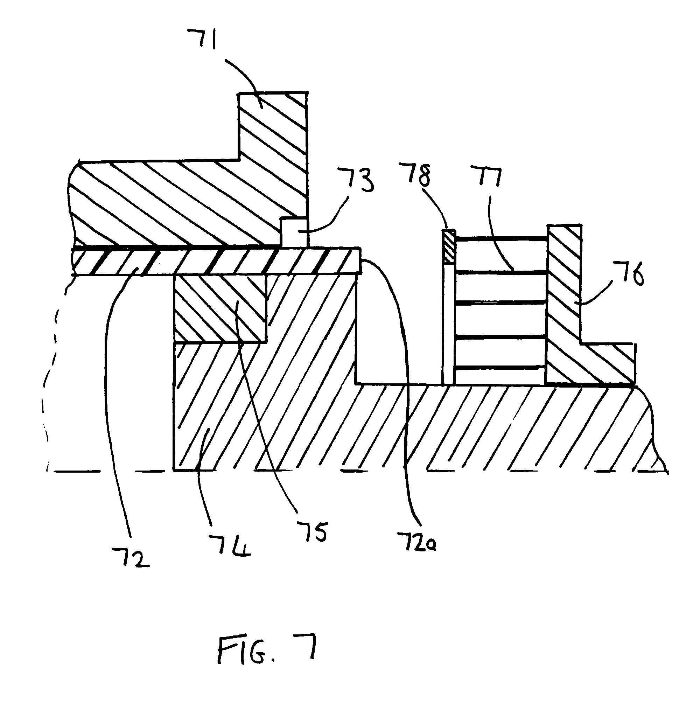

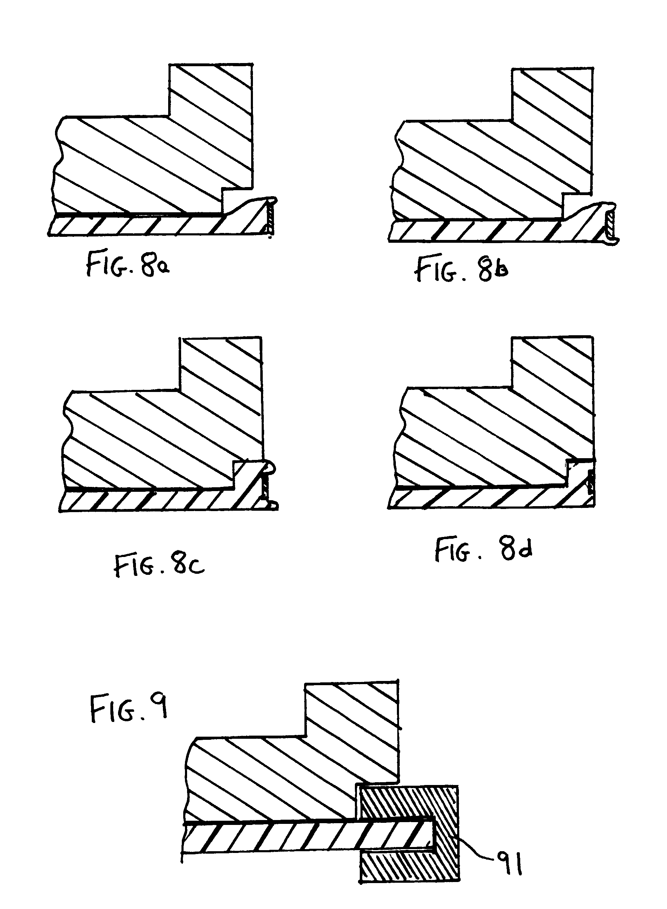

In Figures 3 and 4, the recess 5 is offset slightly from the junction between the pipe elements 1 and 2. In Figure 3, the recess is defined by radially extending wall 31a and axially extending wall 31b of the "box" pipe element 1 and radially extending wall 32a of the "pin" pipe element 2. In Figure 4, the converse arrangement exists, with the recess 5 being defined by radially extending end wall 42a and axially extending wall 42b of the "pin" element 2 and the radially extending wall 41a of the "box" pipe element 1.

In use, the liner pipes 6, 7 are arranged within their associated metal pipe members 1, 2 and the pipe members 1, 2 are screwed together using methods known *per se.* As the pipe elements 1, 2 are screwed together so the stub flanges 8, 9 are compressed against each other to form a seal. Moreover, since one of the stub flanges will be rotating relative to the other as the pipe elements 1, 2 are tightened together, the resulting friction between the surfaces of the flanges 8, 9 may, depending upon the torque applied to the joint, and the extent of compression of the flanges, lead to sufficient heat being produced to melt or soften the surfaces of the flanges to fuse them together. In this way, a very strong seal is provided between the flanges 8, 9.

The reinforcing hoop 12, 13 acts as a strut and prevents the flanges 8, 9 from being deformed radially inwardly and pulled out of recess 5 in response to the periodic high tensile stresses to which the pipe liners are subjected, for example as a result of flow induced vibration, thermal contraction and expansion, or the swelling of the pipe walls that can tend to occur when certain materials are transported through the pipes.

In order to provide a still stronger joint, an induction heating coil mounted on a suitable pipeline pig may be manoeuvred into position within the liner pipe members 6, 7 at the region of the interface and the steel reinforcing hoop 12, 13 induction-heated to bring about melting and fusion of the surfaces of flanges 8, 9, if this has not previously taken place through friction heating.

Pipe joints of the type shown in Figure 3 have been constructed and tested. Thus, a pair of outer steel pipes of 168.275mm (6⅝") outer diameter (O.D.) and 19.05mm (¾") thick walls incorporating a standard screw integral zero upset connector were provided with an annular recess at the radially inner surface of the joint interface, the annular recess having an axial length of 15.6 = 0.4mm and a radial dimension of 40 ± 0.5mm. Polyethylene liner pipes having an OD of 129.2 ± 0.2mm, a 5mm nominal all thickness and stub flange with a shoulder height of 3.5mm, a shoulder thickness of 8.0mm and a reinforcing hoop of 121.0 ± 0.1mm inner diameter, 4.0 ± 0.2mm radial thickness and 2.0 ± 0.1mm axial thickness, were inserted into the outer steel pipes as shown in the Figure, and subjected to hydrostatic pressure following by tensile loading. The tests showed that no leakage occurred at at east 10.34 x 10⁶ Nm⁻² (1500 psi) (at which point the test was discontinued) and that disengagement of the stub flange did not occur until the polyethylene liner had been axially loaded to an least 3 Tonnes.

The pipe joints of the invention do not necessarily need to be of the "pin and box" type, and alternative forms of construction are shown in Figures 5 and 6. In each of Figures 5 and 6, the radially outer metal pipe elements 51, 52 and 61, 62 are provided with flanges 51a, 52a, 61a, 62a, having abutting end faces 51b, 52b, 61b, 62b, which are generally normal to the axial direction of the pipeline. The flanges 51a, 52a, 61a, 62a are connected together by conventional flange connection means, not shown.

Thus with the embodiments illustrated in Figures 1 to 4, the radially outer metal pipe members of Figures 5 and 6 have associated inner liner pipe members 53, 54 and 63, 64 formed of a suitable polymeric material such as polyethylene. The liner pipe members have stub flanges 53a, 54a, 63a, 64a, each of which is provided with an embedded steel reinforcing hoop 55, 56, 65, 66, the purpose of which is the same as the reinforcing hoop described in respect of Figures 1 to 4 above. As with Figures 1 to 4, the radially inner surfaces of the outer metal pipe members 51, 52, 61, 62 together define an annular recess 57, 67 into which the stub ends of the liner pipes fit. As can be seen, the annular recess can span the junction between the two radially outer metal pipes, as shown in Figure 5, or can be offset relative to the pipe junction, as shown in Figure 6.

The outer pipe members can be pipes as such, or they can be any one of a number of pipe couplings and connectors. As will be appreciated, a pipe may be formed with integral "pin" and "box" configurations, or it may be formed with two "pin" ends, a separate double "box"-ended connector being used to connect adjacent lengths of pipe. Similarly, in principle at least, a pipe can be provided with integral twin "box" ends which would connect to a "pin"-ended connector. Furthermore, "pin" or "box" adaptors can be welded to the ends of plain ended pipes. It will be appreciated that the various permutations are numerous and the foregoing are given merely by way of example.

The installation of the liner pipe elements within the outer steel pipe can be made easier by inserting the liner pipe elements as plain ended pipe elements and then forming the stub flanges in situ. The formation of the stub flanges in situ is illustrated in Figures 7 to 9.

Figure 7 shows an arrangement in which an outer steel pipe member 71 has disposed therein a liner pipe member 72 formed from a suitable polymeric material such as polyethylene. Liner pipe member 72 is plain-ended. The outer steel pipe member 71 has an annular recess 73 running around the radially inner surface of its end face.

The apparatus for forming the plain end 72a of the liner pipe member 72 into a stub flange comprises a mandrel or former 74 having an expandable end 75 which has an initial outer diameter corresponding approximately to the inner diameter of the liner pipe element 72. Arranged slidably on the mandrel 74 is a jacking head 76 which is provided with an array of supporting pins 77 for mounting thereon a metal reinforcing hoop 78.

Prior to bringing the jacking head and reinforcing hoop into contact with the plain end 72a of the liner pipe member 72, an induction heated sleeve 91, as shown in Figure 9, is first slipped over the end 72a. The induction heated sleeve is used to heat the liner pipe member 72 to a temperature at which it is sufficiently soft to be deformed. The sleeve is then removed, the expandable end 75 of the former 74 is expanded to grip the liner 72 to the outer steel pipe member 71, and the jacking head moved along the outer surface of the mandrel such that the reinforcing hoop 78 is urged into contact with the end 72a of the liner pipe member. By applying suitable force to the jacking head, the reinforcing hoop 78 deforms the softened end 72a of the liner pipe member radially outwardly and into the annular recess 73 of the outer metal pipe member. The various stages in the development of the stub flange are shown schematically in Figures 8a to 8d. In order to assist the deforming process, by keeping the polymeric material of the end 72a of the pipe member 72 sufficiently soft, the reinforcing hoop 78 may be heated, for example by induction heating, or may be ultrasonically activated during the flange forming cycle. By means of this process, the reinforcing hoop 78 also becomes embedded in the newly formed stub flange.

The jacking head is then removed along with the mandrel 74 and the stub flange is trimmed to remove any bulges or flashing produced during the moulding process.

It will readily be appreciated that numerous modifications and alterations may be made to the pipe joints illustrated in the accompanying drawings without departing from the scope of the claims.

For example, although the drawings illustrate a connection between the stub flanges of two liner elements, the joints of the invention are equally applicable to connections in which the annular recess is of a size to accommodate only a single stub flange. Such an arrangement could be employed when joining a length of pipe to a fitting such as a valve or pump. Moreover, the drawings illustrate arrangements in which each stub flange has its own reinforcing hoop. As an alternative, however, a single reinforcing hoop of double thickness could be used to replace the two individual reinforcing hoops.

The nature of the metal-to-metal joints between the outer pipe members may also be varied. For example, the "pin" or spigot may have a generally uniform diameter, rather than tapering as shown in the drawings, and the "box" or socket would be shaped accordingly.

## Claims

1. A pipe joint comprising first and second outer pipe members (1, 2); means (3, 4) for connecting the first and second outer pipe members (1, 2) in an end-to-end fashion so as to provide a fluid-tight seal therebetween, the fluid-tight seal being capable of withstanding internal pressures of an least 6.895 x 10⁶ N/m² (1000 psi); and, arranged within at least the first outer pipe member (1), a first inner liner pipe member (6) formed of a polymeric material; the liner pipe member (6) being provided at its end with a radially outwardly extending annular stub flange (8) ; an annular supporting hoop (12) being disposed in an annular groove (10) in the end face of the stub flange (8); the first and second outer pipe members (1, 2) together defining on their respective radially inner surfaces an annular recess (5) for retaining the stub flange of the liner pipe member and for clamping the stub flange (8) in place to hold it against axial displacement, wherein the annular recess (5) comprises a pair of generally radially extending conforming surfaces (21a, 22a) and a generally axially extending surface (21b, 22b) linking the said generally radially extending surfaces (21a, 22a).

2. A pipe joint according to Claim 1 wherein the fluid tight seal between the first and second outer pipe members (1, 2) is capable withstanding internal pressures of 34.47 x 10⁶ N/m² (5000 psi) or more.

3. A pipe joint according to Claim 1 or Claim 2 wherein the means (3, 4) for connecting the first and second outer pipe members takes the form of a thread on a radially outer surface of one of the outer pipe members (4) which engages a thread on a radially inner surface of the other outer pipe member (3).

4. A pipe joint according to Claim 1 or Claim 2 wherein the first and second outer pipe members (1, 2) are provided with annular ridges, recesses or other formations which enable the pipe members to be coupled together in a snap-fit joint, or are provided with flanges or other like constructions which enable the pipe members to be secured together by external securing means.

5. A pipe joint according to any one of the preceding Claims wherein the first and second outer pipe members (1, 2) are pipes, the second outer pipe member (2) having an inner liner pipe member (7) arranged therein.

6. A pipe joint comprising first and second outer pipe members (1, 2); means for connecting the first and second outer pipe members (1, 2) in an end-to-end fashion so as to provide a fluid-tight seal therebetween, the fluid tight-seal being capable of withstanding internal pressures of at least 6,895 x 106 N/m2 (1000 psi); and, arranged within the outer pipe members (1, 2), first and second inner liner pipe members (6, 7) formed of a polymeric material; the liner pipe members (6, 7) being provided at their facing ends with radially outwardly extending annular stub flanges (8, 9) providing mating surfaces between the two liner pipes (6, 7) generally normal to the axial direction of the liner pipes; an annular supporting hoop or hoops (12, 13) being disposed in an annular groove (10, 11) in the mating faces of each stub flange (8, 9); the first and second outer pipe members (1, 2) together defining on their respective radially inner surfaces an annular recess (5) for retaining the stub flange (8, 9) of the liner pipe members (6, 7) and for clamping the stub flanges (8, 9) together to form a fluid-tight seal therebetween, wherein the annular recess (5) comprises a pair of generally radially extending confronting surfaces (21a, 22a) and a generally axially extending surface (21b, 22b) linking the said generally radially extending surfaces (21a, 22a).

7. A pipe joint according to any one of the preceding Claims wherein the or each inner liner pipe member (6, 7) is formed from a polymeric material selected from polyolefin homopolymers and co-polymers thereof, or polyvinylidene difluoride.

8. A pipe joint according to Claim 7 wherein the or each inner liner pipe member (6, 7) is formed from polypropylene or polyethylene.

9. A pipe joint according to any one of the preceding Claims wherein the or each inner liner pipe member (6, 7) has a single layer pipe wall.

10. A pipe joint according to any one of Claims 1 to 8 wherein the or each inner liner pipe member (6, 7) has a multi-layer pipe wall.

11. A pipe joint according to Claim 10 wherein the or each liner pipe member (6, 7) has one or more barrier layers formed from a barrier material which prevents or reduces permeation of hydrocarbons through the liner pipe wall.

12. A pipe joint according to Claim 11 wherein one radially extending surface (21a) is provided by one outer pipe member (1) and the other radially extending surface (22a) is provided by the other outer pipe member (2).

13. A pipe joint according to Claim 11 or Claim 12 wherein the generally axially extending surface is provided by one of the pipe members (1).

14. A pipe joint according to Claim 11 or Claim 12 wherein the generally axially extending surface is provided by both of the pipe members (1, 2).

15. A pipe joint according to any one of the preceding Claims wherein the stub flange (8, 9) of the or each inner liner pipe member (6, 7) is formed from a crosslinked material.

16. A pipe joint according to Claim 6 or any Claim dependent thereon wherein the respective stub flanges (8, 9) of the inner liner pipe members (6, 7) are welded together.

17. A pipe joint according to Claim 16 wherein the respective stub flanges (8, 9) are friction welded together.

18. A pipe joint according to Claim 16 wherein the respective stub flanges (6, 9) have been welded together by induction heating.

19. A process for forming a pipe joint wherein a hoop reinforced stub flange (8, 9) as defined in any one of the preceding claims is formed in situ using a hot forming technique.

20. A process according to claim 19 wherein for example, an induction heated sleeve is placed about the end of a plain ended polymeric pipe member to soften or melt the said end, and a jacking head having a reinforcing hoop supported thereon urged against the softened or melted end so as to deform it radially outwardly into the shape of a stub flange, the reinforcing hoop (12, 13) being embedded in the stub flange as it is formed.

## Patentansprüche

1. Rohrleitungsverbinder mit ersten und zweiten äußeren Rohrleitungsteilen (1, 2), Verbindungsmitteln (3, 4) zum Verbinden der ersten und zweiten äußeren Rohrleitungsteile (1, 2) in einer End-zu End-Weise, um dazwischen eine mediendichte Dichtung herzustellen; die mediendichte Dichtung ist in der Lage, einem internen Druck von mindesten 6,895 x 10⁶N/m² (1000 psi) zu widerstehen; und mindestens innerhalb des ersten äußeren Rohrleitungsteiles (1) ist ein erstes inneres Leitungsrohrteil (6), das aus polymerem Material hergestellt ist, angeordnet; das innere Leitungsrohrteil (6) ist an seinem Ende mit einem radial nach außen sich erstreckenden ringförmigen Flanschstumpf (8) versehen; ein ringförmiges Stützflacheisen (12) ist in einer ringförmigen Nut (10) in der Stirnseite des Flanschstumpfes (8) eingelagert; die ersten und zweiten äußeren Rohrleitungsteile (1, 2) bilden zusammen an ihren jeweiligen radial inneren Oberflächen eine ringförmige Aufnahme (5) zur Aufnahme des Flanschstumpfes des Leitungsrohrstückes und zum Einklemmen des Flanschstumpfes (8) an diesem Platz, nun gegen eine axiale Verschiebung zu sichern, wobei die ringförmige Aufnahme (5) ein Paar von sich im wesentlichen radial erstreckenden gegeneinander gerichteten Oberflächen (21a, 22a) und sich im wesentlichen axial erstreckenden Oberflächen (21b, 22b) besitzt, die die genannten sich in wesentlichen radial erstreckenden Oberflächen (21a, 22a) verbinden.

2. Rohrleitungsverbinder nach Anspruch 1, wobei die mediendichte Dichtung zwischen den ersten und zweiten äußeren Rohrleitungsteilen (1, 2) in der Lage ist, einem inneren Druck von 34,47 x 10⁶N/m² (5000 psi) oder mehr zu widerstehen.

3. Rohrleitungsverbinder nach Anspruch 1 oder 2, wobei die Verbindungsmittel (3, 4) zum Verbinden der ersten und zweiten äußeren Rohrleitungsteile die Form eines Gewindes an einer radial außen gelegenen Oberfläche auf einem der äußeren Leitungsteile (4) hat, wobei jenes Gewinde mit einem Gewinde auf einer radial inneren Oberfläche des äußeren Leitungsteiles (3) verbunden ist.

4. Rohrleitungsverbinder nach Anspruch 1 oder 2, wobei die ersten und zweiten äußeren Rohrleitungsteile (1, 2) mit ringförmigen Rippen, Ausnehmungen oder anderen Gestaltungen versehen sind, die es ermöglichen, daß die Rohrstücke zusammengekuppelt werden können, oder mit Flanschen mit einem Schnappverschluß oder anderen derartigen Konstruktionen versehen sind, die es ermöglichen, daß die Rohrteile mit externen Sicherungsstücken sicher zusammengefügt werden können.

5. Rohrleitungsverbinder nach einem der vorstehenden Ansprüche, wobei die ersten und zweiten äußeren Rohrleitungsteile (1, 2) Rohre sind, in dessen zweiten, äußeren Rohrleitungsteil (2) ein inneres Leitungsrohrteil (7) angeordnet ist.

6. Rohrleitungsverbinder mit ersten und zweiten äußeren Rohrleitungsteilen (1, 2); Verbindungsmitteln zum Verbinden der ersten und zweiten äußeren Rohrleitungsteile (1, 2) in einer End-zu End-Weise, um eine mediendichte Dichtung dazwischen herzustellen; die mediendichte Dichtung ist in der Lage, einem inneren Druck von mindestens 6,895 x 10⁶N/m² (1000 psi) zu widerstehen; und innerhalb der äußeren Rohrleitungsteile (1, 2) sind erste und zweite innere Leitungsrohrteile (6, 7) angeordnet, die aus einem Polymermaterial hergestellt sind; die inneren Leitungsrohrteile (6, 7) sind an ihren Stirnseiten mit sich radial nach außen erstreckenden ringförmigen Flanschstümpfen (8, 9) versehen, die zwischen den zwei Leitungsrohren (6, 7) im wesentlichen zur Achsrichtung der Leitungsrohre Paßoberflächen tragen; ein ringförmiges Stützflacheisen oder Flacheisen (12, 13) sind in einer ringförmigen Nut (10, 11) der Paßflächen jedes Flanschstumpfes (8, 9) angeordnet; die ersten und zweiten äußeren Rohrleitungsteile (1, 2) bilden zusammen auf ihrer jeweils radial inneren Oberfläche eine Ringaufnahme (5) zur Aufnahme der Flanschstümpfe (8, 9) der Leitungsrohrteile (6, 7) und zum Zusammenklemmen der Flanschstümpfe (8, 9), um dazwischen eine mediendichte Dichtung zu bilden, wobei die Ringaufnahme (5) ein Paar sich im wesentlichen radial erstreckender gegeneinander gerichtete Oberflächen (21a, 22a) aufweist, die die gesamten sich im wesentlichen radial erstreckenden wesentlichen axial erstreckenden Oberflächen (21b, 22b) verbindet.

7. Rohrleitungsverbinder nach einem der vorstehenden Ansprüche, wobei das oder jedes innere Leitungsrohrteil (6, 7) aus einem Polymermaterial geformt ist, das aus Polyolefin-Homopolymeren und Copolymeren davon oder aus Polyvinylidendifluorid ausgewählt ist.

8. Rohrleitungsverbinder nach Anspruch 7, wobei das oder jedes innere Leitungsrohrteil (6, 7) aus Polypropylen oder Polyethylen geformt ist.

9. Rohrleitungsverbinder nach einem der vorstehenden Ansprüche, wobei das oder jedes innere Leitungsrohrteil (6, 7) eine einschichtige Rohrwandung hat.

10. Rohrleitungsverbinder nach einem der Ansprüche 1 bis 8, wobei das oder jedes innere Leitungsrohrteil (6, 7) eine vielschichtige Rohrwandung hat.

11. Rohrleitungsverbinder nach Anspruch 10, wobei das oder jedes innere Rohrleitungsteil (6, 7) eine oder mehrere Sperrschichten aufweist, die von einem Sperrmaterial geformt sind, das ein Durchdringen von Kohlenwasserstoffen durch die Leitungsrohrwandung verhindert oder vermindert.

12. Rohrleitungsverbinder nach Anspruch 11, wobei sich eine radial erstreckende Oberfläche (21a) auf einem äußeren Rohrleitungsteil (1) befindet und sich die andere radial erstreckende Oberfläche (22a) auf dem anderen äußeren Rohrleitungsteil (2) befindet.

13. Rohrleitungsverbinder nach Anspruch 11 oder 12, wobei die sich im wesentlichen axial erstreckende Oberfläche durch eines der Rohrleitungsteile (1) bereitgestellt ist.

14. Rohrleitungsverbinder nach Anspruch 11 oder 12, wobei die sich im wesentlichen axial erstreckende Oberfläche durch beide Rohrleitungsstücke (1, 2) bereitgestellt ist.

15. Rohrleitungsverbinder nach einem der vorstehenden Ansprüche, wobei der Flanschstumpf (8, 9) des oder jedes inneren Leitungsrohrteiles (6, 7) aus einem kreuzvernetztem Material geformt ist.

16. Rohrleitungsverbinder nach Anspruch 6 oder einem davon abhängigen Anspruch, wobei die betreffenden Flanschstümpfe (8, 9) der inneren Leitungsrohrteile (6, 7) zusammengeschweißt sind.

17. Rohrleitungsverbinder nach Anspruch 16, wobei die betreffenden Flanschstümpfe (8, 9) miteinander reibverschweißt sind.

18. Rohrleitungsverbinder nach Anspruch 16, wobei die betreffenden Flanschstümpfe (8, 9) durch Induktionsleitungen miteinander verschweißt sind.

19. Verfahren zur Bildung eines Rohrverbinders, wobei ein mit einem Stützflacheisen verstärkter, wie in einem der vorstehenden Ansprüche festgelegter Flanschstumpf (8, 9) in sich geformt wird, wobei eine Heißformtechnik benutzt wird.

20. Verfahren nach Anspruch 19, wobei eine, beispielsweise induktiv, geheizte Manschette um das Ende eines glatt endenden polymeren Rohrteiles gelegt ist, um dieses Ende zu erweichen oder zu schmelzen, und ein Umschließungskopf, der ein Stützflacheisen trägt, wird gegen das erweichte oder geschmolzene Ende gepreßt, daß dieses radial nach außen in die Gestalt eines Flanschstumpfes (8, 9) verformt wird; das Stützflacheisen (12, 13) wird bei der Formung des Flanschstumpfes (8, 9) in diesen eingebettet.

## Revendications

1. Raccord pour tuyauteries, comprenant des premier et second éléments de tuyauterie extérieurs (1, 2) ; des moyens (3, 4) pour raccorder les premier et second éléments de tuyauterie extérieurs (1, 2) bout à bout, de façon à créer un joint étanche aux fluides entre eux, le joint étanche aux fluides étant capable de résister à des pressions internes d'au moins 6.895 x 10⁶ N/m² (1000 psi); et, disposé au moins à l'intérieur du premier élément de tuyauterie extérieur (1), un premier élément de tuyauterie intérieur de doublure (6) formé en matériau polymère; l'élément de tuyauterie de doublure (6) étant muni, à son extrémité, d'une bride à talon annulaire (8) dirigée radialement vers l'extérieur; un anneau de soutien annulaire (12) étant disposé dans une gorge annulaire (10) ménagée dans la face d'extrémité de la bride à talon (8); les premier et second éléments de tuyauterie extérieurs (1, 2) définissant ensemble, sur leurs surfaces radiales intérieures respectives, un interstice annulaire (5) destiné au maintien de la bride à talon de l'élément de tuyauterie de doublure, et pour serrer la bride à talon (8) en place de façon à l'empêcher de bouger axialement, raccord dans lequel l'interstice annulaire (5) comprend deux surfaces antagonistes (21a, 22a) d'orientation généralement radiale, et une surface (21b, 22b) d'orientation généralement axiale, faisant la liaison entre lesdites surfaces (21a, 22a) d'orientation généralement radiale.

2. Raccord pour tuyauteries selon la revendication 1, dans lequel le joint étanche aux fluides entre les premier et second éléments de tuyauterie (1, 2) est capable de résister à des pressions internes de 34,47 x 10⁶ N/m² (5000 psi) ou plus.

3. Raccord pour tuyauteries selon la revendication 1 ou la revendication 2, dans lequel le dispositif (3, 4) servant à raccorder les premier et second éléments de tuyauterie adopte la forme d'un filetage taillé dans une surface radiale extérieure de l'un des éléments de tuyauterie extérieurs (4) et qui est en prise avec un filetage taillé dans une surface radiale intérieure de l'autre élément de tuyauterie extérieur (3).

4. Raccord pour tuyauteries selon la revendication 1 ou la revendication 2, dans lequel les premier et second éléments de tuyauterie extérieurs (1, 2) sont dotés de cannelures annulaires, d'enfoncements ou d'autres conformations structurelles qui permettent l'accouplement des éléments de tuyauterie avec un joint à emboîtement par déclic, ou sont pourvus de brides ou d'autres structures similaires qui permettent la solidarisation des éléments de tuyauterie avec des éléments de fixation extérieurs.

5. Raccord pour tuyauteries selon l'une quelconque des revendications qui précèdent, dans lequel les premier et second éléments de tuyauteries (1, 2) sont des tuyaux, le second élément de tuyauterie extérieur (2) présentant un élément de tuyauterie intérieur de doublure (7) disposé dans son espace interne.

6. Raccord pour tuyauteries, comprenant des premier et second éléments de tuyauterie extérieurs (1, 2); des moyens pour raccorder les premier et second éléments de tuyauterie extérieurs (1, 2) bout à bout, de façon à créer un joint étanche aux fluides entre eux, le joint étanche aux fluides étant capable de résister à des pressions internes d'au moins 6,895 x 10⁶ N/m² (1000 psi); et, disposés à l'intérieur des éléments de tuyauterie extérieurs (1, 2), des premier et second éléments de tuyauterie intérieurs de doublure (6, 7) fabriqués en matériau polymère; les éléments de tuyauterie de doublure (6, 7) étant dotés, à leurs extrémités en vis à vis, de brides à talon annulaires (8, 9) dirigées radialement vers l'extérieur, qui créent des surfaces conjuguées entre les deux tuyaux de doublure (6, 7), d'une manière généralement perpendiculaire au sens axial des tuyaux de doublure; un ou des anneau(x) de soutien (12, 13) étant posés dans une gorge annulaire (10, 11) ménagée dans les faces conjuguées de chacune des brides à talon (8, 9); les premier et second éléments de tuyauterie extérieurs (1, 2) définissant ensemble, sur leurs surfaces radiales internes respectives, un interstice annulaire (5) destiné au maintien des brides à talon (8, 9) des éléments de tuyauterie de doublure (6, 7) et à serrer les brides à talon (8, 9) entre elles, de manière à former entre ces dernières un joint étanche aux fluides, raccord dans lequel l'interstice annulaire (5) comprend deux surfaces antagonistes (21a, 22a) d'orientation généralement radiale, et une surface (21b, 22b) d'orientation généralement axiale, qui fait la liaison entre lesdites surfaces (21a, 22a) d'orientation généralement radiale.

7. Raccord pour tuyauteries selon l'une quelconque des revendications précédentes, dans lequel l'élément de tuyauterie intérieur de doublure (6, 7), ou chacun d'eux, est fabriqué dans un matériau polymère sélectionné parmi les homopolymères de polyoléfines et les copolymères de celles-ci, ou le difluorure de polyvinylidène.

8. Raccord pour tuyauteries selon la revendication 7, dans lequel l'élément de tuyauterie intérieur de doublure (6, 7), ou chacun d'eux, est fabriqué en polypropylène ou en polyéthylène.

9. Raccord pour tuyauteries selon rune quelconque des revendications qui précèdent, dans lequel l'élément de tuyauterie intérieur de doublure (8, 7) présente une paroi à une seule couche.

10. Raccord pour tuyauteries selon l'une quelconque des revendications 1 à 8, dans lequel l'élément de tuyauterie intérieur de doublure (8, 7), ou chacun d'eux, présente une paroi multicouche.

11. Raccord pour tuyauteries selon la revendication 10, dans lequel l'élément de tuyauterie intérieur de doublure (8, 7), ou chacun d'eux, présente une ou plusieurs couches fabriquées en matériau barrière qui empêche ou réduit l'infiltration d'hydrocarbures au travers de la paroi du tuyau de doublure.

12. Raccord pour tuyauteries selon la revendication 11, dans lequel une surface d'orientation radiale (21a) est créée par un élément de tuyauterie extérieur (1), et l'autre surface d'orientation radiale (22a) est créée par l'autre élément de tuyauterie extérieur (2).

13. Raccord pour tuyauteries selon la revendication 11 ou la revendication 12, dans lequel la surface d'orientation généralement axiale est créée par l'un des éléments de tuyauterie (1).

14. Raccord pour tuyauteries selon la revendication 11 ou la revendication 12, dans lequel la surface d'orientation généralement axiale est créée par les deux éléments de tuyauterie (1, 2).

15. Raccord pour tuyauteries selon l'une quelconque des revendications qui précèdent, dans lequel la bride à talon (8, 9) de l'élément de tuyauterie intérieur de doublure (6, 7), ou de chacun d'eux, est fabriquée dans un matériau réticulé.

16. Raccord pour tuyauteries selon la revendication 6 ou l'une quelconque des revendications qui en dépendent, dans lequel les brides à talon respectives (8, 9) des éléments de tuyauterie intérieurs de doublure (8, 7) sont soudées entre elles.

17. Raccord pour tuyauteries selon la revendication 16, dans lequel les brides à talon respectives (8, 9) sont soudées entre elles par friction.

18. Raccord pour tuyauteries selon la revendication 16, dans lequel les brides à talon respectives (8, 9) ont été soudées entre elles par chauffage à haute fréquence.

19. Procédé pour réaliser un raccord pour tuyauteries, dans lequel une bride à talon (8, 9) renforcée par un anneau et telle que définie dans l'une quelconque des revendications qui précèdent, est formée in situ à l'aide d'une technique de thermoformage.

20. Procédé selon la revendication 19, dans lequel, par exemple, un manchon chauffé par induction est placé autour de l'extrémité d'un élément de tuyauterie en polymère à bouts plans, pour ramollir ou faire fondre ladite extrémité, et une tête de mandrinage portant un anneau du renforcement en appui sur elle est poussée contre l'extrémité ramollie ou fondue, de manière à la déformer radialement vers l'extérieur, pour lui faire prendre la forme d'une bride à talon, l'anneau de renforcement (12, 13) étant encastré dans la bride à talon lorsque cette dernière est formée.
